(19) Europäisches Patentamt
European Patent Office
Office européen des brevets

(11) **EP 2 485 122 A1**

(12) **EUROPEAN PATENT APPLICATION**
published in accordance with Art. 153(4) EPC

(43) Date of publication:
**08.08.2012 Bulletin 2012/32**

(51) Int Cl.:
**G06F 3/033** *(2006.01)*   **G06F 3/041** *(2006.01)*
**G06F 3/042** *(2006.01)*   **G06T 1/00** *(2006.01)*

(21) Application number: **10820597.2**

(22) Date of filing: **29.09.2010**

(86) International application number:
**PCT/JP2010/066974**

(87) International publication number:
**WO 2011/040482 (07.04.2011 Gazette 2011/14)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.09.2009 JP 2009227526**

(71) Applicant: **Sharp Kabushiki Kaisha**
**Osaka-shi, Osaka 545-8522 (JP)**

(72) Inventors:
• **MIYAKE, Takahiro**
**Osaka-shi, Osaka 545-8522 (JP)**

• **MIKI, Renzaburou**
**Osaka-shi, Osaka 545-8522 (JP)**
• **NORO, Tetsushi**
**Osaka-shi, Osaka 545-8522 (JP)**
• **TAKAKURA, Hideya**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **OPTICAL POINTING DEVICE AND ELECTRONIC EQUIPMENT PROVIDED WITH THE SAME, AND LIGHT-GUIDE AND LIGHT-GUIDING METHOD**

(57)    In order to reduce the number of components in the optical pointing device, and the number of steps for assembling, bonding, etc. the components, a light guide (24) according to the present invention for use in an optical pointing device (30) is configured to include a redirecting element (12) for receiving light from a touch surface (11) and reflecting the light so as to guide the light into a horizontal direction, and an image forming section (14) for receiving the reflected light and reflecting the reflected light to an opposite direction backward to the horizontal direction, so as to form an image of the light, the light guide (24) outputting the image of the light from a light output section.

FIG. 1

**Description**

Technical Field

The present invention relates to an input device, and more specifically, an optical pointing device capable of being mounted on a portable information terminal such as a portable telephone.

Background Art

In general, portable information terminals such as portable telephones and PDA (Personal Digital Assistants) employ a key pad as a user interface for inputting information. The key pad is constituted by a plurality of buttons and a direction button(s). Moreover, the portable information terminals have been improved to have a display section capable of displaying graphic or etc. In association of this improvement, GUI (Graphical User Interface) in which the display section is used two dimensionally has been adopted as a method of displaying information to a user.

As such, the portable information terminals have been functionally highly sophisticated to have a display function equivalent to that of a computer. The conventional input means of the portable information terminals are not suitable and convenient for selecting an GUI icon or the like. Thus, a pointing device as operable as a mouse or touch pad used for computers has been desired for the portable information terminals.

As a pointing device being mountable on a portable information terminal, an optical pointing device has been proposed, which uses an image capturing element to observe an appearance of an object (such as a finger tip) to touch the device, and extracts a change in appearance on a touch surface, thereby to detect a movement of the object. More specifically, the optical pointing device is configured to radiate light on the object on the touch surface, forms an image of the appearance of the object on the image capturing element via a lens, and detects a change in the appearance of the object, thereby detecting the movement of the object.

In order to form an image on the image capturing element from reflective light reflected from the object on the touch surface, the optical pointing device requires some distance from the touch surface to the image capturing element (an optical path length of the reflective light reflected from the object). Therefore, the optical pointing device configured such that the lens and the image capturing element are provided below the touch surface cannot be designed to have a small dimension in a direction perpendicular to the touch surface. The dimension of the optical pointing device in the direction perpendicular to the touch surface is thickness of the optical pointing device. Thus, it has been difficult to give the optical pointing device a thinner thickness. However, the portable information terminals are required to be thinner. Accordingly, the optical pointing device is required to have a smaller dimension (thickness) in the direction perpendicular to the touch surface.

In order to meet such requirements, an optical pointing device has been proposed, in which a redirecting optical element (such as prism) is provided right below the touch surface so that the reflective light reflected from the object is redirected in a horizontal direction to the image capturing element on which an image is formed from the light. For example, Patent Literature 1 discloses an optical pointing device in which a prism for redirecting light from a perpendicular path to a horizontal path, and a focusing lens are assembled together with a holder provided with light emitting means. Moreover, Patent Literature 2 discloses an optical pointing device in which a reflecting mirror for receiving light from an object and reflecting the light into a horizontal direction, and a focusing lens and an image sensor, each of which is provided to face a horizontal optical path perpendicularly. Further, Patent Literature 3 discloses (*sic*).

As such, the optical pointing devices as described in Patent Literatures 1 to 3 are configured such that the optical path are redirected in the horizontal direction. Thus, how long the optical path is does not affect how long the optical pointing device is in the dimension (thickness) in the perpendicular direction. This makes it possible to realize an optical pointing device with a long optical path and a small dimension in the perpendicular direction. That is, this makes it possible to give a thinner thickness to the optical pointing device.

Citation List

Patent Literatures

Patent Literature 1
Japanese Patent Application Publication, Tokukai, No. 2008-226224 (Publication Date: September 25, 2008)
Patent Literature 2
Japanese Translation of PCT International Application, Tokuhyo, No. 2008-507787 (Publication Date: March 13, 2008)

Patent Literature 3
Japanese Translation of PCT International Application, Tokuhyo, No. 2008-510248 (Publication Date: April 3, 2008)

Summary of Invention

Technical Problem

However, these conventional arts are configured such that the optical pointing device includes a plurality of components such as a covering section for protection against external impact or the like, the prism (or reflecting mirror) for receiving the light from the object and reflecting the light into the horizontal direction, and a focusing (image forming) lens section for focusing (image formation), etc. Thus, a manufacturing method for manufacturing the optical pointing device requires assembling, bonding, etc. of the plurality of components. In the step of assembling, bonding, etc., there is a risk that an assembling error occurs due to mispositioning of the components. Thus, an increase in the number of steps of assembling, bonding, etc. makes it difficult to keep a high detection accuracy of the optical pointing device.

Moreover, an increase in the number of components in the optical pointing device leads to higher cost thereof. Furthermore, the optical pointing device has a difficulty to be thinner when the number of components in the optical pointing device is increased or the optical pointing device has a structure for assembling the components.

The present invention was accomplished in view of the aforementioned problem, and an object of the present invention is to realize an optical pointing device with a thin thickness by reducing the number of components and the number of steps of assembling, bonding, etc.

Solution to Problem

In order to attain the object, a light guide according to the present invention is a light guide, including: a reflective section for receiving light entering via a light incident section, and reflecting the light so as to guide the light to a light guiding direction; and an image forming reflective section for receiving the light reflected by the reflective section and reflecting the light to an opposite direction backward to the light guiding direction, so as to form an image of the light, the light guide outputting the image of the light from a light output section.

Moreover, a light guiding method according to the present invention is a light guiding method, including: reflecting light entering via a light incident light, so as to guide the reflected light into a light guiding direction; reflecting the reflective light into an opposite direction backward to the light guiding direction, so as to form an image of the light; and outputting the image of the light from a light output section.

With this configuration, because the light guide is configured to have the reflective section and the image forming reflective section, the light guide, the reflective section, and the image forming reflective section can be integrated as one component. This reduces the number of components constituting an optical pointing device. Thus, the number of steps in assembling can be reduced in a manufacturing process of the optical pointing device. As a result, it is possible to reduce assembling errors in assembling the components. Further, by preparing a mold for the light guide with high accuracy, it is possible to manufacture the reflective section and the image forming reflective section with high accuracy. Furthermore, the reflective section and the image forming reflective section can be positioned with highly accurate positional relationship by stable process. This reduces the manufacturing cost of the optical pointing device and improves the optical pointing device in terms of detection accuracy for detecting an object.

In order to attain the object, an optical pointing device according to the present invention is an optical pointing device, including a light source for radiating light on an object, a light guide for receiving, via a light incident section, light reflected from the object, and guiding the light so as to output the light from a light output section, and an image capturing element for receiving the light outputted from the light guide, wherein: the light guide is configured to receive the light via the light incident section, reflect the light so as to guide the light to a light guiding direction, reflect the light to an opposite direction backward to the light guiding direction, so as to form an image of the light, and output the image of the light from the light output section.

With this configuration, the light guide is configured to receive the light via the light incident section, reflect the light so as to guide the light to a light guiding direction, reflect the light to an opposite direction backward to the light guiding direction, so as to form an image of the light, and output the image of the light from the light output section. That is, it is not necessary to have, in addition to the light guide, another component such as a component for reflecting light to guide the light to the light guiding direction, a component for reflecting the light to the opposite direction backward to the light guiding direction, so as to form an image of the light. This reduces the number of components constituting an optical pointing device. Thus, the number of steps in assembling can be reduced in a manufacturing process of the optical pointing device. As a result, it is possible to reduce assembling errors in assembling the components. This reduces the manufacturing cost of the optical pointing device and improves the optical pointing device in terms of detection accuracy for detecting an object.

Advantageous Effects of Invention

As described above, the light guide according to the present invention is configured to include: a reflective section for receiving light entering via a light incident section, and reflecting the light so as to guide the light to a light guiding direction; and an image forming reflective section for receiving the light reflected by the reflective section and reflecting the light to an opposite direction backward to the light guiding direction, so as to form an image of the light, the light guide outputting the image of the light from a light output section.

This configuration reduces the manufacturing cost of the optical pointing device including the light guide, and realizes the optical pointing device with detection accuracy for detecting an object.

For a fuller understanding of the nature and advantages of the invention, reference should be made to the ensuing detailed description taken in conjunction with the accompanying drawings.

Brief Description of Drawings

Fig. 1

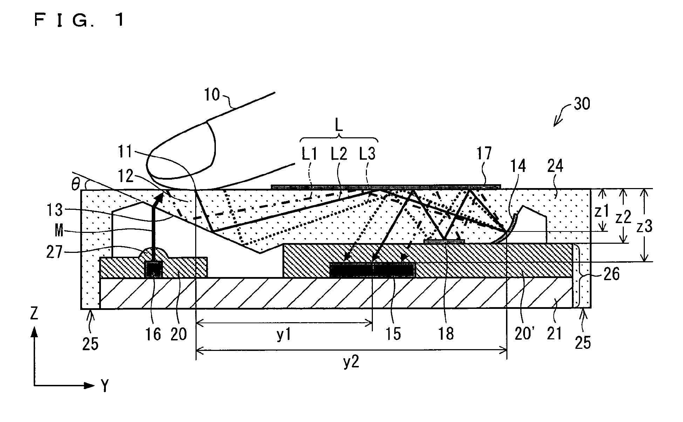

Fig. 1 is a schematic diagram illustrating a cross sectional structure of an optical pointing device according to Embodiment 1 of the present invention.
Fig. 2

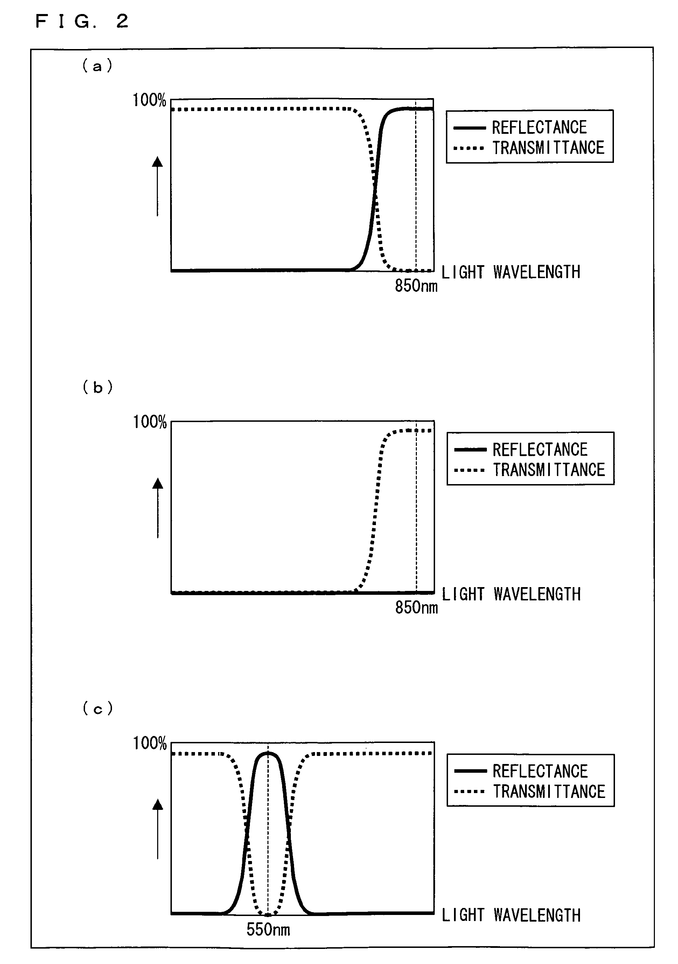

Fig. 2 is a view a transmittance and reflectance of a reflective film against light wavelengths.
Fig. 3

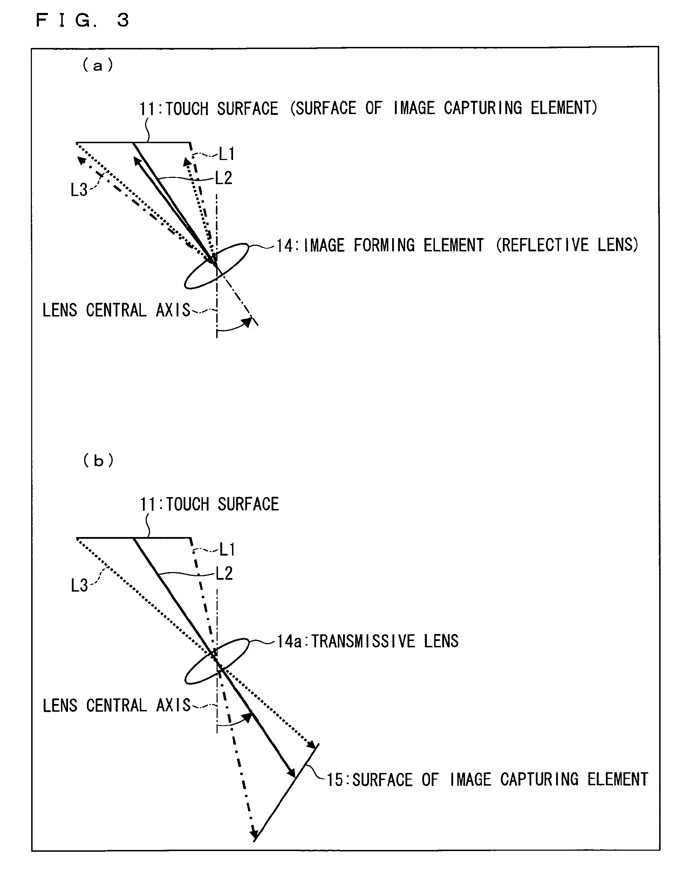

Fig. 3 is a view schematically illustrating positional relationships of a touch surface, an image forming element, an image capturing element.
Fig. 4

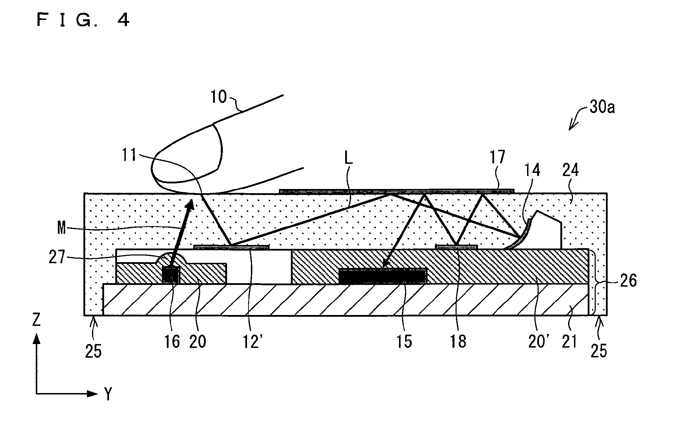

Fig. 4 is a schematic diagram illustrating a cross sectional structure of an optical pointing device according to Embodiment 2 of the present invention.
Fig. 5

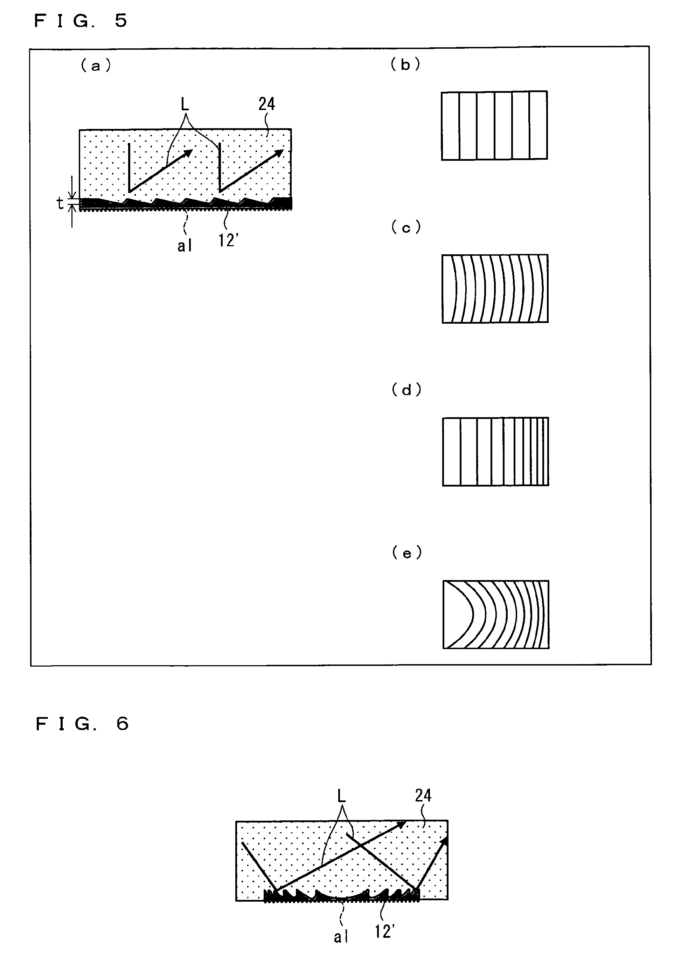

Fig. 5 is a view illustrating a concrete structure of a diffractive element and a groove pattern the diffractive element according to Embodiment 2.
Fig. 6
Fig. 6 is a view illustrating a concrete structure of a diffractive element according to Embodiment 2.
Fig. 7

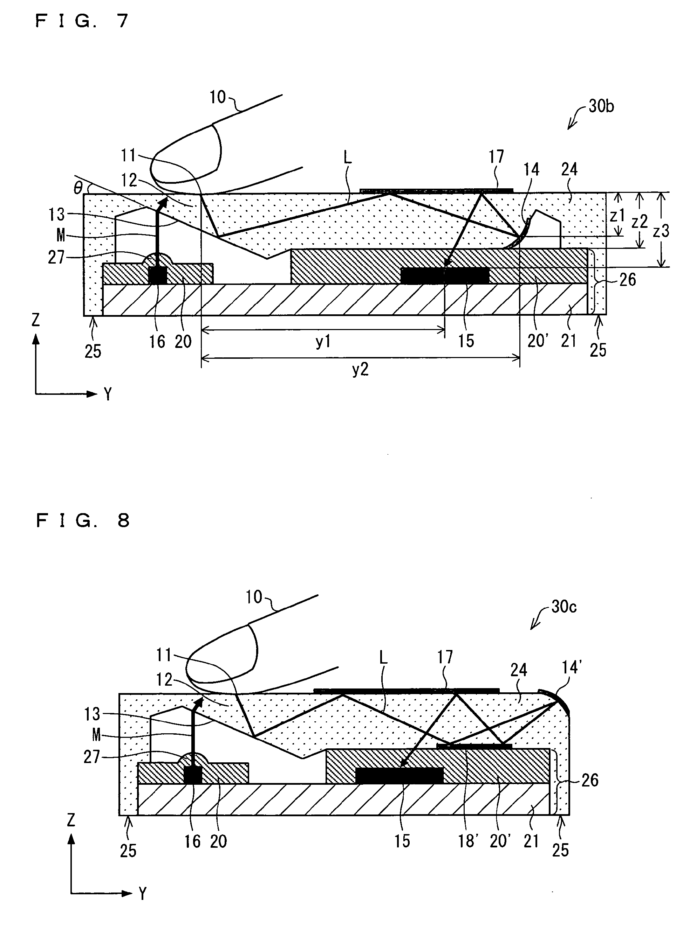

Fig. 7 is a schematic diagram illustrating a cross sectional structure of an optical pointing device according to Embodiment 3 of the present invention.
Fig. 8
Fig. 8 is a schematic diagram illustrating a cross sectional structure of an optical pointing device according to Embodiment 4 of the present invention.
Fig. 9

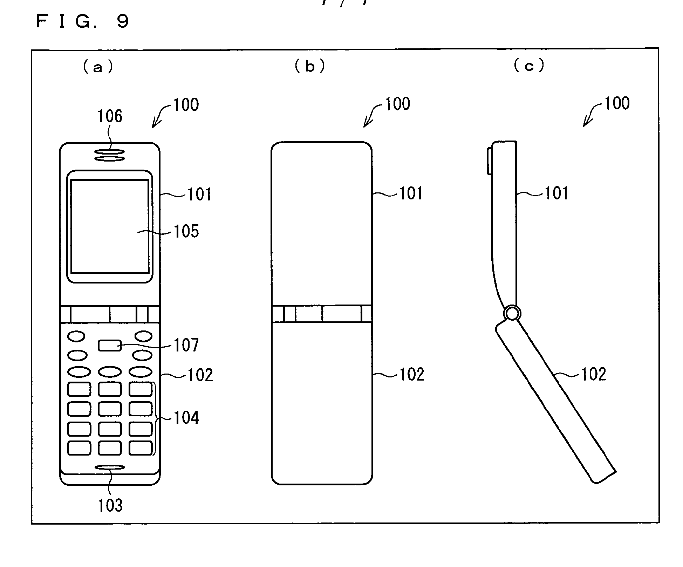

Fig. 9 is a schematic view illustrating Embodiment 5 of the present invention and illustrating an outer appearance of a portable telephone on which an optical pointing device is provided.

Description of Embodiments

Embodiments of the present inventions are described based on examples in which an optical pointing device is provided with an LED as its light source module. Optical pointing devices according to the present invention are configured such that movement of an object is detected by irradiating light to an object (such as a finger tip) whose image is to be captured, and receiving light reflected from the object. Hereinafter, structures of optical pointing devices of the Embodiments are described concretely. Like members with like functions and effects are labeled with like reference numerals, and their explanation is not repeated.

[Embodiment 1]

Embodiment 1 of the present invention is described here referring to Fig. 1. Fig. 1 is a view schematically illustrating a cross sectional structure of an optical pointing device 30 according to Embodiment 1. As illustrated in Fig. 1, the optical pointing device 30 includes a substrate section 26 and a cover section (light guide) 24. The substrate section 26 includes a circuit substrate 21, a light source 16, an image capturing element 15, and transparent resin 20 and 20'. The transparent resin 20 is provided with a lens section 27. The cover section 24 is configured to have a touch surface (light incident section) 11, a redirecting element (reflecting section) 12 having a slant surface (tilted surface) 13, an image forming element (image reflecting section) 14, and reflective surfaces (reflective films) 17 and 18. An object 10 illustrated as touching the touch surface 11 of the cover section 24 is an object (such as a finger tip) whose image is to be captured. The optical pointing device 30 is configured to detect movement of the object 10. For the sake of easily illustrating how the object 10 relates to the optical pointing device 30, the object 10 is illustrated relatively smaller with respect to the optical pointing device 30.

Here, assume that z axis is a thickness direction (vertical direction of Fig. 1) of the optical pointing device 30, and y axis is a width direction (horizontal direction of Fig. 1) of the optical pointing device 30. Assume that a positive direction of the z axis is an upward direction with respect to the optical pointing device 30. Assume that a positive direction (light guiding direction) of the y axis is a direction from the light source 16 to the image capturing element 15. Moreover, a negative direction of the z axis may be referred to as a perpendicular direction, and the positive direction of the y axis may be referred to as a horizontal direction. X axis, which is not illustrated here, is a depth direction of the optical pointing device 30, and a positive direction of the x axis is a direction from a far side to a near side of the optical pointing device 30 illustrated in Fig. 1.

To begin with, a configuration of the substrate section 26 is described. In the present embodiment, the light source 16 and the image capturing element 15 are mounted on one circuit substrate 21. The light source 16 and the image capturing element 15 are electrically connected with the circuit substrate 21 by wire-boding or flip-chip mounting. On the circuit substrate 21, circuits are formed. The circuit is for controlling timing of light emitting of the light source 16, detecting the movement of the object by receiving an electronic signal outputted from the image capturing element 15. The circuit substrate 21 has a flat surface made from the same material. For example, the circuit substrate 21 includes a printed substrate, a lead frame, etc.

The light source 16 is configured to radiate light toward the touch source 11 of the cover section 24. Light M emitted from the light source 16 passes through the lens section 27 of the transparent resin 20 and is redirected by the redirecting element 12 of the source section 24. Thereby, a traveling direction of the light M is changed to reach the touch surface 11. That is, the light M enters the touch surface from a slant direction (at an incident angle with respect to the touch surface). As described later, the cover section 24 is made from a material whose refractive index is larger than that of air. Thus, if there is no object 10 on the touch surface 11, part of the light M entering the touch surface 11 passes through the touch surface 11, and the rest of the light M is reflected on the touch surface 11. In this case where there is no object 10 on the touch surface 11, the light M does not pass through the touch surface 11 but is totally reflected on the touch surface 11 toward inside the cover section 24, if the incident angle of the light M to the touch surface 11 meets conditions of total reflection. On the other hand, if there exists the object 10 on the touch surface 11, the light M is reflected on a surface of the object 10 touching the touch surface 11, thereby being directed to the cover section 24. The light source 16 is, for example, an LED or the like, especially, it is preferable that the light source 16 is an infrared light emitting diode with high luminance.

The image capturing element 15 receives the reflective light (L1 to L3) radiated from the light source 16 and then reflected from the object 10 (hereinafter, the light L1 to L3 radiated from the light source 16 and then reflected from the object 10 is referred to a light L collectively). Based on the light thus received, the image capturing element 15 captures an image present on the touch surface 11. Then, the image capturing element 15 converts the captured image into image data. More specifically, the image capturing element 15 is an image sensor such as CMOS, CCD, etc. The image capturing element 15 includes a DSP (Digital Signal Processor: computing section) not illustrated herein. The received light is supplied to the DSP as the image data. The image capturing element 15 continues image-capturing for the image on the touch surface 11 with certain intervals according to instructions from the circuit substrate 21.

If the object 10 in touch with the touch surface 11 moves, the image captured by the image capturing element 15 this time when the object 10 moves becomes different from the image captured a previous time right before this time. The image capturing element 15 compares the image captured this time and the image captured at the previous time right before this time by comparing their values at a same position by using the DSP. Thereby, the image capturing element 15 calculates out a movement amount and a movement direction of the object 10. That is, in case where the object 10 on the touch surface 11 is moved, the image data captured this time when the object 10 moves is image data having values shifted, by a certain amount, from values of the image data captured at the previous time right before this time. By using the DSP, the image capturing element 15 calculates out the movement amount and movement direction of the object 10 based on the certain amount. The image capturing element 15 supplies an electric signal indicative of the calculated movement amount and movement direction to the circuit substrate 21. The DSP may be provided not to the image capturing element 15, but to the circuit substrate 21. In such a case, the image capturing element 15 is configured to send the image data of the captured image to the circuit substrate 21 sequentially.

To summarize the operation of the image capturing element 15, the image capturing element 15 captures an image on the touch surface 11 if no object 10 is present on the touch surface 11. In case where the object 10 is present in touch with the touch surface 11, the image capturing element 15 captures the image of the surface of the object 10 in touch with the touch surface 11. For example, if the object 10 is a finger tip, the image capturing element 15 captures an image of a finger print of the finger tip. In this case, the image data of the image captured by the image capturing element 15 is different from the image data captured when no object 10 is present on the touch surface 11. Thus, the DSP of the image capturing element 15 sends to the circuit substrate 21 a signal indicating that the object 10 is in touch with the touch surface 11. Then, when the object 10 moves, the DSP compares the image data captured this time when the object 10 moves and the image data captured at the previous time right before this time, thereby calculating out the movement amount and movement direction of the object 10. Then, the image capturing element 15 sends to the circuit substrate 21 the signal indicative of the calculated movement amount and movement direction.

The light source 16 and the image capturing element 15 are sealed with transparent resin, thereby being surrounded by the transparent resin 20 or 20'. The transparent resin 20 and 20' has a substantially rectangular shape. The transparent resin 20 has a lens section 27 on its top surface (ceiling surface). The lens section 27 has a semi-spherical shape. The lens section 27 is provided above the light source 16 so as to focus the light M emitted from the light source 16. The transparent resin 20 and 20', at bottom, touches with a top surface of the circuit substrate 21. The transparent resin 20 and 20' has a recess touching the light source 16 or the image capturing element 15 tightly. A side of the transparent 20 on a negative side along the y axis and a side of the transparent resin 20' on a positive side along the y axis are on the same plane as a side of the circuit substrate 21. The transparent resin may be a thermo-setting resin such as epoxy resin or a thermoplastic resin such as ABS (Acrylonitrile Butadiene Styrene) etc., for example.

As such, the light source 16 and the image forming element 15 on the circuit substrate 21 are sealed with a transparent resin. In this way, the circuit substrate 21, the light source 16, the image capturing element 15, and the transparent resin 20 and 20' ate integrated as the substrate section 26. By this, the number of the component of the optical bonding device 30 can be reduced, and the assembling the optical bonding device 30 can be done with a smaller number of steps. This reduces a manufacturing cost of the optical pointing device 30 and realizes an optical pointing device 30 with a high detection accuracy for detecting an object. Moreover, the light source 16 an the image capturing element 15 are sealed with the transparent resin 20 or 20' separately. This prevents the light M from traveling through the transparent resin from the light source 16 to the image capturing element 15. That is, this configuration prevents that stray light enters the image capturing element 15. This prevents the optical pointing device 30 from performing misoperation due to stray light, thereby making it possible for the optical pointing device 30 to detect the object 10 with high accuracy.

Next, a configuration of the cover section 24 is described. The cover section 24 is for protecting the sections and elements, such as light source 16 and the image capturing element 15, constituting the optical pointing device 30. The cover section 24 is provided above the substrate section 26 and touches side surfaces and upper surface of the substrate section 26 tightly. Here, a reverse surface of the cover section 24 refers to a surface portion of the cover section 24, which surface portion not exposed to outside when the cover section 24 and on the negative side along the z axis is mounted on the substrate section 26 so as to form the optical pointing device 30. In other words, the reverse surface of the cover 18 is a surface thereof facing the substrate section 26. Thus, a part of the reverse surface of the cover section 24 touches the side surfaces and the upper surface o the substrate section 26 tightly. A bottom surface 25 of the cover section 24 in on the same plane as a bottom surface of the substrate 26. A upper surface of the cover section 24 is parallel with the bottom surface 25 of the cover section 24 and the bottom surface of the substrate section 26. Both sides of the cover section 24 are perpendicular to the upper surface of the cover section 24 and the bottom surface 25 of the cover section 24 and the bottom surface of the substrate section 26. That is, the optical pointing device 30 has a substantially rectangular shape. The optical pointing device 30 is not limited to this shape, provided that the upper surface of the cover section 24 is parallel with the bottom surface 25 of the cover section 24 and the bottom surface of the substrate section 26. Both sides of the cover section 24 may not be perpendicular to the upper surface of the cover section 24 and the bottom surface 25 of the cover section 24 and the bottom surface of the substrate section 26. For example, in the cross sectional view of the optical pointing device 30 as illustrated in Fig. 1, the optical pointing device 30 may have a trapezoidal shape. That is, as long as the side surfaces of the cover section 24 are flat, the upper surface of the cover section (top surface of the optical pointing device 30) may have a length different from that of the bottom surface 25 of the cover section 24 and the bottom surface of the substrate section 26 (bottom surface of the optical pointing device 30).

The touch surface 11 is a surface at which the object 10 touches the optical pointing device 30. The touch surface 11 is an upper surface of the cover section 24 and is positioned above the light source 16.

The redirecting element (prism) 12 is a part of the cover section 24. The redirecting element 12 is located above the light source 16 and below the touch surface 11 and positioned inside a recess of the cover section 24, thereby being not in touch with the substrate section 26 on the reverse surface of the cover section 24. The redirecting element 12 has a slant surface 13 having a slant angle θ between the slant surface 13 and the upper surface of the cover section 24. The redirecting element 12 redirects at the slant surface 13 the light M radiated thereto from the light source 16, thereby changing the optical path of the light M toward the object 10. Moreover, the slant surface of the redirecting element 12 totally reflects the light L reflected from the object 10. Thereby, the redirecting element 12 changes the optical path of the light L toward the positive direction of y axis inside the cover section 24. In other words, the redirecting element 12 is configured to receive via the touch surface 11 the light reflected from the object 10 into the cover section 24 and reflecting the light so as to guide the light into the horizontal direction. The light L reflected from the object 10 is thus reflected totally on the slant surface 13, thereby traveling toward a reflective surface 17 later described. As such, the slant surface 13 of the redirecting element 12 allows the light M to pass therethrough but totally reflects the light L. For this, the cover section 24 is made from a material having a refractive index greater than that of a space above the light source 16 and between the cover section 24 and the substrate section 26. For example, the cover section 24 may be made from a polycarbonate resin or acrylic resin of visible light absorbing type with a refractive index of about 1.5, while the space may be an air layer. That is, the slant surface 13 of the redirecting element 12 has no aluminum reflective film etc. deposited thereon in order to perform the total reflection of the light L.

The image forming element (lens) 14 is for reflecting the reflective light L from the object 10, and forming an image of the object 10 on the image capturing element 15 . More specifically, the light reflected into the horizontal direction by the redirecting element 12 is reflected and imaged by the image forming element 14. The light thus imaged by the image forming element 14 travels out of the cover section 24 into the image capturing element 15. Here, a position at which the light imaged by the image element 14 goes out of the cover section 24 to the image capturing element 15 is referred to as an outing section. The outing section is part of the reverse surface of the cover section 24. The image forming element 14 is part of the cover section 24, and is positioned at a place above the image capturing element 15 but on the positive direction of the image capturing element 15 along the y axis. The image forming element 14 is in a recess section of the cover section 24, thereby being not in touch with the substrate section 26. The image forming element 14 has a toroidal surface having different curvatures along two directions perpendicular to each other. The image forming element 14 is configured to reflect the reflective light L on the toroidal surface so as to form an image of the image capturing element 15. In order for the image forming element 14 to efficiently reflect the light L, a reflective film made from a metal (for example, aluminum, nickel, gold, silver, dielectric dichroic film, or the like) is deposited on the toroidal surface of the image forming element 14.

The reflective surface 17 is for reflecting the light L totally reflected on the slant surface 13 so as to cause the light L to enter into the image forming element 14, and thereby to enter into the image capturing element 15 the light L reflected on the image forming element 14. The reflective surface 17 is positioned above the image capturing element 15, and on the upper surface of the cover section 24. The reflective surface 17 is formed by depositing a reflective film on the upper surface of the cover section 24. The reflective film forming the reflecting surface 17 is exposed outside and easy to see by a user. Thus, it is preferable to be a film not so eye-catching in appearance. For example, in case where the light source 16 emits light of infrared wavelength (for example, 800 nm or higher) out of the visible wavelength range, the reflective film forming the reflective surface 17 may be an infrared reflective film having a property as illustrated in (a) of Fig. 2, which is a view plotting transmittance and reflectance against wavelengths, where the horizontal axis is a wavelength (nm), and the vertical axis is the transmittance and reflectance (%). The dotted line indicates the transmittance and the solid line indicates the reflectance. The same is true in (b) and (c) of Fig. 2. One concrete example of the reflective film forming the reflective surface 17 is one reflective for infrared light, emitted from the light source 16, in a wavelength band of 800 nm or higher from the light source 16 but is transmissive to light in a visible wavelength band of 800 nm or less. By appropriately designing the reflectance and transmittance of the reflective film forming the reflective surface 17, and the wavelength of the light radiated from the light source 16, it is possible to form a reflective surface 17 that is not eye-catching in appearance but is capable of efficiently reflecting the reflective light L from the object 10.

Moreover, in case where the light source 16 emits light of infrared wavelength (for example, 800 nm or higher) out of the visible wavelength, it is preferable that the cover section 24 is made from a material having the property as illustrated in (b) of Fig. 2. More specifically, the cover section 24 may be preferably formed from a polycarbonate resin or acrylic resin of visible light absorbing type, which allows only the infrared light pass therethrough. By forming the cover section 24 from such a material, it is possible to cut out a visible light portion of unnecessary light entering the cover section 24 from outside. By forming the reflective surface 17 reflective of infrared light, it is possible to cut out an infrared light portion of the unnecessary light. This allows to cut out the unnecessary light that enters the optical pointing device 30, thereby preventing misoperation caused by the unnecessary light.

Further, in case where the surface the cover section 24, which is the surface of the optical pointing device 30, is colored, the upper surface of the cover section 24 and an upper surface of the reflective surface 17 may be coated with a material reflective to a wavelength band of a certain color (green in the example illustrated herein) but transmissive to the other wavelength, as illustrated in (c) of Fig. 2. By coating the upper surface of the cover section 24 and the upper surface of the reflective surface 17 with a material having such a property, the surface of the optical pointing device 30 can be colored as desired, without sacrificing optical properties of the optical pointing device 30.

The reflective surface 18 is for reflecting again toward the reflective surface 17 the light L reflected by the image forming element 14 and then by the reflective surface 17. The reflective surface 18 is positioned at a place above the image capturing element 15 but on the positive side with respect to the image capturing element 15 along the y axis. The reflective surface 18 is positioned on the reverse surface of the cover section 24. The reflective surface 18 is formed by depositing a reflective film on the reverse surface of the cover section 24. The reflective film forming the reflective surface 18 is preferably capable of efficiently reflecting light. For example, the reflective surface 18 may be made by depositing a metal such as aluminum, nickel, gold, silver, dielectric dichroic film or the like.

Here, described here again is the optical path via which the light emitted from the light source 16 is reflected on the object 10 and enters the image capturing element 15. To begin with, the light M emitted from the light source 16 is refracted via the slant surface 13 of the redirecting element 12, so as to reach the touch surface 11. In case where there is the object 10 on the touch surface 11, the light M radiated from the light source 16 is reflected, by scatter reflection, on that surface of the object 10, which touches the touch surface 11. The light L reflected on the surface of the object 10 is totally reflected on the slant surface 13 of the redirecting element 12, thereby changing its traveling direction to the positive direction of the y axis. The light L totally reflected by the slant surface 13 is reflected on the reflective surface 17, thereby reaching the image forming element 14. The light L is reflected on the image forming element 14 to the reflective surface 17. Then the light L is reflected by the reflective surface 17, the reflective surface 18, and then again the reflective surface 17, thereby entering the image capturing element 15.

Assume that, among the light L emitted from the light source 16, reflected on the object 10, and entering the image capturing element 15, (i) light entering a center of the image capturing element 15 (light reflected on the object 10 positioned at a center of the touch surface 11) is referred to as L2, (ii) light entering an edge portion of the image capturing element 15 on the positive side along the y axis is referred to as L1, and (iii) light entering an edge portion of the image capturing element 15 on the negative side along the y axis is referred to as L3. The use of the image forming element 14 for reflecting the light L to the image capturing element 15 thereby forming an image on the image capturing element 15 makes it possible to reduce differences among optical path lengths of the light L1, L2, and L3 to reach the image capturing element 15. This reduces a risk that the light L1, L2, or L3 along the y axis is out of focus on the image capturing element 15. By this, the ability of forming an image on the image capturing element is improved, thereby making it possible to attain clear imaging of the object 10.

In the present embodiment, the differences among the optical path lengths of the light L1, L2, and L3 can be keep small in such a configuration in which the touch surface 11 and the surface of the image capturing element 15 are in parallel with each other. The reason why this is possible is explained below referring to Fig. 3. Fig. 3 is a view schematically illustrating positional relationship of the touch surface 11, the image forming element 14 (or image forming element 14a) and the image capturing element 15. Fig. 3 illustrates optical paths of the light L1, L2, and L3 in a case where a central axis of the touch surface 11 and a central axis of the image forming element 14 (or image forming element 14a) are coincidental with each other. (a) of Fig. 3 illustrates a case where the image forming element 14, which is a reflective lens for reflecting the light L, as in the present embodiment. (b) of Fig. 3 illustrates a case where an image forming element 14a, which is a transmissive lens for passing the light L therethrough.

In case of the reflective lens as illustrated in (a) of Fig. 3, it is possible to reduce the differences among the optical path lengths of the light L1, L2, and L3 from the touch surface 11 to the image capturing element 15, while still allowing, even if the image forming element 14 is positioned with a lens central axis being not in parallel with but slant to the central axis of the touch surface 11 (a vertical line passing the center of the touch surface 11), the configuration in which the touch surface 11 and the surface of the image capturing element 15 are in parallel with each other. On the other hand, in the case of the transmissive lens as illustrated in (b) of Fig. 3, it is necessary to dispose the touch surface 11 and the surface of the image capturing element 15 not to be in parallel with each other but to cross each other, in order to reduce the differences of the optical path lengths of the light L1, L2, and L3 from the touch surface 11 to the surface of the image capturing element 15, if the image forming element 14 is positioned with a lens central axis being slant to the central axis of the touch surface 11. Thus, in the case of the transmissive lens, it is difficult to reduce the thickness of the optical pointing device 30. That is, a reflective lens is preferable to a transmissive lens as the image forming element 14 in order to attain a thinner thickness of the optical pointing device 30 and small optical path length, in case where the image forming element 14 is positioned with a lens central axis being slant to the central axis of the touch surface 11.

As described above, in the present embodiment, the touch surface 11, the redirecting element 12, and the image forming element 14 are integrated with the cover section 24. Thus, it is possible to reduce the number of components of the optical pointing device 30, and the assembling of the optical pointing device 30 can be done with a smaller number of steps. Moreover, by preparing a highly accurate mold for molding the cover section 24, the slant surface 13 of the redirecting element 12 and the image forming element 14 can be produced highly accurately, and the touch surface 11, the redirecting element 12, and the image forming element 14 can be positioned with highly accurate positional relationship by stable process. This reduces the manufacturing cost of the optical pointing device 30 and improves the optical pointing device 30 in terms of detection accuracy for detecting an object.

If the touch surface, the redirecting element, the image forming element, etc. are separate components as in the conventional arts, structures for assembling, such as an abutting surface, an interlocking shape, etc. are necessary at connection portions of the components. Moreover, it is necessary to have special allowance for adjusting the positional relationship between components. However, if the touch surface 11, the redirecting element 12, and the image forming element 14 are integrated with the cover section 24 as in the present invention, such structures are not necessary, and further the special allowance for positional adjustment is not necessary too, provided that an required minimum optical surface is ensured. Thus, with the configuration in which the touch surface 11, the redirecting element 12, and the image forming element 14 are integrated with the cover section 24, it is possible to reduce the thickness of the cover section 24 including the touch surface 11, the redirecting element 12, and the image forming element 14. This leads to smaller thickness of the optical pointing device 30.

Moreover, in the present embodiment, the cover section 24 is mounted on the substrate section 26 by using the side surfaces and the upper surface of the substrate section 26 as positioning fiducials. This allows to position the substrate section 26 and the cover section 24 with highly accurate positional relationship, thereby positioning the sections and elements of the optical pointing device 30 with high accuracy. This makes it possible to realize an optical pointing device 30 with a high detection accuracy for detecting the object 10.

Moreover, in the present embodiment, the optical path of the light L (from the object 10 at which the light L is reflected, to the transparent resin 20' covering the image capturing element 15) is encompassed within a single component, namely, the cover section 24. That is, the light L propagates through one medium (light guide). More specifically, the followings are performed within a single medium, namely, the cover section 24: (i) the reflective light L from the object 10 enters the cover section 24; (ii) the total reflection of the light to redirect the light into the horizontal direction by the redirecting element 12, (iii) the reflection performed by the image forming element 14, and (iv) the light goes out of the cover section 24 to the image capturing element 15. Thus, it is possible to prevent scatter reflection or light attenuation caused at a boundary between different medium. This makes it possible for the image capturing element 15 to capture a clear image. This makes it possible for the optical pointing device 30 to detect the object 10 stably with high accuracy.

Moreover, it may be configured that a light-shielding resin may be provided to cover the side surfaces and the upper surface of the transparent resin 20 except the lens section on the upper surface, and that a light-shielding resin may be provided to cover the side surfaces and the upper surface of the transparent resin 20' except a portion of the upper surface of the transparent resin 20' via which portion the reflective light L from the object enters. The light-shielding resin may be a thermo-setting resin such as epoxy resin or a thermoplastic resin such as ABS (Acrylonitrile Butadiene Styrene) etc., for example, similarly to the transparent resin. The light-shielding resin contain carbon black, unlike the transparent resin. By surrounding the transparent resin 20 and 20' with the light-shielding resin in this way, it is possible to prevent the image capturing element 15 from receiving the light directly from the light source 16, or light reflected from somewhere other than the object 10. That is, it is possible to prevent the image capturing element 15 from receiving stray light other than the reflective light L reflected from the object 10. This prevents the optical pointing device 30 from misoperation caused due to the stray light. This allows the optical pointing device 30 to detect the object 10 with high accuracy. Moreover, instead of providing the light-shielding resin to surround the transparent resin 20 and 20', the side surfaces and the upper surface of the transparent resin 20 except the lens section on the upper surface, and the side surfaces and the upper surface of the transparent resin 20' except a portion of the upper surface of the transparent resin 20' via which portion the reflective light L from the object enters may be colored in black or roughened to be translucent.

In case where the light-shielding resin is provided to surround the transparent resin 20 and 20', the side surfaces of the circuit substrate 21 and surfaces formed with the light-shielding resin are positioned on the same plane. Moreover, the reverse surface of the cover section 24 and surfaces formed with the light-shielding resin are in close contact with each other. Thus, the surfaces formed with the light-shielding resin and the both sides of the circuit substrate 21 can be functioned as positioning fiducials for mounting the cover section 24 on the substrate section 26.

[Example of Embodiment 1]

Next, one example of the optical pointing device of Embodiment 1 is described with concrete settings and numeral values. The cover section is made from a polycarbonate resin of visible light absorbing type with a refractive index of 1.59. The redirecting element has a slant surface with a slant angle $\theta$ of 24°. Moreover, the cover section is sized such that the length $z_2$ from the reverse surface thereof touching the upper surface of the substrate section to the upper surface thereof along the z axis is 0.5 mm. The length $z_2$ is referred to as the thickness of the cover section. Further, $y_2$, which is a length from the center of the touch surface to the center of the toroidal surface of the image forming element 14 along the y axis, is 2.8 mm. Moreover, $y_1$, which is a length from the center of the touch surface to the center of the image capturing element along the y axis, is 1.4 mm. Moreover, $z_1$, which is a length from the upper surface of the cover section to the center of the toroidal surface of the image forming element along the z axis, is 0.38 mm. $z_3$, which is a length from the upper surface of the cover section to the upper surface of the image capturing element along the z axis, is 0.62 mm. The toroidal surface of the image forming element had a spherical shape with a curvature radius of -2.5644773 mm across the X-Y cross section, and an aspheric shape along the Y-Z cross section, which aspheric shape is designed to satisfy the following aspheric formula (1):

[Math 1]

$$Z = \frac{RY^2}{1+\sqrt{1-(1+K)\,R^2Y^2}} + AY^2 + BY^4 + CY^6 + DY^8$$

$$\cdots\cdots(1)$$

where K is a constant of a cone, R is a curvature radius, A, B, C, and D are aspheric coefficients of second, fourth, sixth, eighth-orders, respectively, Z is a length of a vertical line to a tangent plane at a peak of the aspheric surface from a point located on the aspheric surface and positioned at a height of Y from the optical axis. Here, the following values are employed for K, R, A, B, C, and D.
K=0
R=-2.75963
A=0.0041215677
B=0.0042418757
C=0.0066844763
D=-0.084438065

[Embodiment 2]

Embodiment 2 of the present invention is described herein referring to Fig. 4. Fig. 4 is a cross sectional structural diagram schematically illustrating an optical pointing device 30a according to Embodiment 2. In Embodiment 2, a diffractive element 12' is provided in replacement of the redirecting element 12 for total reflection of the reflective light L into the horizontal direction in Embodiment 1. The following describes what is different in Embodiment 2 in comparison with Embodiment 1 due to the use of the diffractive element 12'. In Embodiment 2, what is identical with Embodiment 1 is not described again.

As illustrated in Fig. 4, a substrate section 26 is configured such that a side surface of transparent resin 20 on a negative side along the y axis is positioned not on the plane on which a side surface of a circuit substrate 21 is, but on the positive side with respect to the side surface of the circuit substrate 21 along the y axis. Light M emitted from a light source 16 passes through a lens section 27 of the transparent resin 20, refracted via a reverse surface of a cover section 24, and reaches a touch surface 11.

The cover section 24 is configured to have the touch surface 11, the diffractive element 12', an image forming element 14, and reflective surfaces 17 and 18. The cover section 24 is positioned above the substrate section 26, and is in touch with both side surfaces of the circuit substrate 21, the side surface of the transparent resin 20 on the negative size along the y axis, a side surface of transparent resin 20' on the positive side along the y axis, and an upper surface of the transparent resin 20'.

The diffractive element 12' is located above the light source 16 and below the touch surface 11, and is positioned on the reverse surface of the cover section 24 so as not to be in touch with the substrate section 26. The diffractive element 12' is configured to reflect the light L reflected from the object 10, thereby changing an optical path of the light L into the positive direction of y axis inside the cover section 24. The light L reflected from the object 10 and then reflected by the diffractive element 12' is guided to the reflective surface 17.

A concrete shape of the diffractive element 12' is described here, referring to Fig. 5.(a) of Fig. 5 is a structural diagram schematically illustrating a cross sectional shape of the diffractive element 12'. The diffractive element 12' is a reflective diffractive element using a +1 order reflective diffracted light. For example, the diffractive element 12' preferably has a blazed cross sectional shape as illustrated in (a) of Fig. 5, in order to generate + 1 order light. By using a blazed diffractive element 12' as illustrated in (a) of Fig. 5, it is possible to attain a higher light use efficiency and reduce stray light such as 0 order light, -1 order light, and higher order diffracted light. By this, the optical pointing device 30a can prevent deterioration of image forming capacity of its optical system.

Moreover, in order to attain higher reflectance, it is preferable that a reflective film a1 (made from, for example, aluminum, silver, gold, dielectric dichroic film, or the like) is deposited on an outer surface (negative-side surface along the z axis) of the diffractive element 12'. Here, as illustrated in (a) of Fig. 5, t is a groove depth (along the z direction) of the blazed shape of the diffractive element 12'. The groove depth t is preferably one to optimize +1 order diffraction efficiency. For example, it is preferable that t = $\lambda/(2n)$, where n is the refractive index of the cover section 24, and $\lambda$ is an optical wavelength of the light emitted from the light source 16.

Moreover, it is preferable that the groove pattern of the blazing shape of the diffractive element 12' has straight line grooves with constant pitches, as illustrated in (b) of Fig. 5. In order to have a larger diffraction angle, smaller pitches are preferable. Most cost effective in production of the pitches is to prepare grooves by processing a mold by cutting work using a turning tool. It is desirable that the groove pitches of the diffractive element 12' are in a range of 0.8 to 3.0 $\mu$m, in consideration of accuracy of cutting work to prepare the grooves.

Further, in order to attain a better image forming capacity for forming an image of the object 10 on the image capturing element 15, the groove pattern of the diffractive element 12' may have curved grooves as illustrated in (c) of Fig. 5, so as to correct distortion of the image. Moreover, the groove pitches of the diffractive element 12' may not be constant but gradually changed as illustrated in (d) of Fig. 5, so as to give the diffractive element 12' a lens effect to a certain direction. With this configuration, aberration caused due to a focal distance difference between the x axis direction and the y axis direction can be corrected on the image capturing element 15. Further, the groove pattern of the diffractive element 12' may have curved and inconstant pitches as illustrated in (e) of Fig. 5, so as to correct both the image distortion and astigmatism.

Moreover, another concrete example of the diffractive element 12' is a reflective fresnel lens. One concrete shape of such a fresnel lens is illustrated in Fig. 6, which is a structural diagram, like (a) of Fig. 5, schematically illustrating a cross sectional shape of a diffractive element 12', which is a fresnel lens. As illustrated in Fig. 6, the fresnel lens has a blazed cross sectional shape. Moreover, in order to attain higher reflectance, it is preferable that a reflective film a1 (made from, for example, aluminum, silver, gold, dielectric dichroic film, or the like) is deposited on the outer surface of the diffractive element 12'. In the case where the diffractive element 12' is a fresnel lens, the cover section 24 can have a more even thickness, compared with the cases where a prism or bulk-type lens is integrally formed in the cover section 24. Thus, this configuration can give a thin thickness to the optical pointing device 30a while attaining a better strength of the cover section 24.

When the diffractive element 12' is a hologram lens, it is possible to correct aberration that cannot be corrected with normal lenses. Thus, when the diffractive element 12' is a hologram lens, it is possible to improve the image forming capacity, thereby making it possible for the image capturing element 15 to capture a clear image of the object 10.

As described above, when the diffractive element 12' is used in order to receive the light L reflected from the object 10 and reflect the light L so as to guide the light L into the horizontal direction, the cover section 24 can have a more even thickness, compared with the case where the redirecting element (prism) 12 is formed in the cover section 24. Therefore, it is possible to realize a thin thickness of the cover section 24 while increasing the strength of the cover section 24. In addition to this, this configuration makes it possible to radiate the light of the light source 16 over the touch surface 11 with even light strength.

Moreover, in the optical pointing devices with such configuration that the reflective light L from the object 10 is redirected into a horizontal direction (for example, the configurations of Patent Literature 1, 2, and 3), the size of the redirecting element 12, especially, the length of the redirecting element 12 along the z axis direction affects the thickness of the optical pointing device largely. That is, in order to design the optical pointing device with a thinner thickness, it is important to reduce the length of the redirecting element 12 along the z axis direction. However, the size of the redirecting element 12 can not be so freely designed, and the size of the redirecting element 12 is largely dependent on the size of the touch surface 11. In order to detect the appeared on the touch surface 11, it is necessary that the touch surface 11 should have a certain degree of area. When the area of the touch surface 11 is ensured, the size of the redirecting element 12 becomes large inevitably, thereby making it impossible to reduce the thickness (size along the z axis direction) of the optical pointing device 30.

In Embodiment 2, the diffractive element 12' is used instead of the redirecting element 12. The diffractive element 12' can be smeller in the size along the z axis direction than the redirecting element 12. By this, Embodiment 2 can attain a thinner thickness of the optical pointing device 30a, compared with Embodiment 1.

Moreover, in Embodiment 2, the cover section 24 is mounted on the substrate section 26 by using, as positioning fiducials, both the side surfaces of the circuit substrate 21, the side surface of the transparent resin 20 on the negative side along the y axis, the side surface of the transparent resin 20' on the positive side along the y axis, and the upper surface of the transparent resin 20'. This makes it possible to position the substrate section 26 and the cover section 24 with a highly accurate positional relationship. Thus, the sections and the elements constituting the optical pointing device 30a can be disposed highly accurately. This makes it possible to realize an optical pointing device 30a with a high detection accuracy for detecting the object 10.

[Embodiment 3]

Embodiment 3 of the present invention is described herein referring to Fig. 7. Fig. 7 is a cross sectional structural diagram schematically illustrating an optical pointing device 30b according to Embodiment 3. In Embodiment 3, the reflective surface 18 provided to the cover section 24 in Embodiment 1 is omitted. That is, a cover section 24 in Embodiment 3 includes a touch surface 11, a redirecting element 12, an image forming element 14, and a reflective surface 17. The following describes what is different in Embodiment 3 in comparison with Embodiment 1 due to the lack of the reflective surface 18. In Embodiment 3, what is identical with Embodiment 1 is not described again.

In Embodiment 3, the lack of the reflective surface 18 causes light L to travel an optical path different from that of Embodiment 1. That is, in Embodiment 3, the reflective light L reflected from the object 10 is totally reflected by a slant surface 13 of the redirecting element 12 so as to be redirected into the horizontal direction to the reflective surface 17. Then, the like L is reflected by the reflective surface 17, so as to reach the image forming element 14. The light L is reflected back to the reflective surface 17 by the image forming element 14, and then reflected by the reflective surface 17, so as to enter the image capturing element 15.

As such, in Embodiment 3, the light L reflected by the image forming element 14 is reflected only once by the reflective surface 17 before entering the image capturing element 15. Therefore, the reflective light L from the object 10 has less opportunities to losing reflectance by being reflected by the element, before entering the image capturing element 15. This improves light use efficiency. Further this configuration allows to design the optical path length of the light L to be relatively shorter. By this, it is possible to realize a bright optical system with a small F number.

It is possible to apply Embodiment 3 to Embodiment 2 so as to omit the reflective surface 18 from Embodiment 2 similarly, while Embodiment 3 is described based on the case where the reflective surface 18 is omitted from Embodiment 1. In this configuration can be realized by appropriately designing the shape and position of the diffractive element 12', the positions of the image forming element 14 and image capturing element 15.

[Example of Embodiment 3]

Next, one example of the optical pointing device of Embodiment 3 is described with concrete settings and numeral values. The cover section is made from a polycarbonate resin of visible light absorbing type with a refractive index of 1.59. The redirecting element has a slant surface with a slant angle θ of 25°. Moreover, the cover section is sized such that the length z2 from the reverse surface thereof touching the upper surface of the substrate section to the upper surface thereof along the z axis is 0.54 mm. Further, y2, which is a length from the center of the touch surface to the center of the toroidal surface of the image forming element 14 along the y axis, is 2.75 mm. Moreover, y1, which is a length from the center of the touch surface to the center of the image capturing element along the y axis, is 2.1 mm. Moreover, z1, which is a length from the upper surface of the cover section to the center of the toroidal surface of the image forming element along the z axis, is 0.43 mm. z3, which is a length from the upper surface of the cover section to the upper surface of the image capturing element along the z axis, is 0.60 mm. The toroidal surface of the image forming element had a spherical shape with a curvature radius of -0.4193264 mm across the X-Y cross section, and an aspheric shape along the Y-Z cross section, which aspheric shape is designed to satisfy the following aspheric formula (2):

[Math. 2]

$$Z = \frac{RY^2}{1+\sqrt{1-(1+K)\,R^2Y^2}} + AY^2 + BY^4 + CY^6 + DY^8 + EY^{10} + FY^{12} + GY^{14}$$

$$\ldots\ldots(2)$$

where K is a constant of a cone, R is a curvature radius, A, B, C, D, E, F, and G are aspheric coefficients of second, fourth, sixth, eighth, tenth, twelfth, and fourteenth-orders, respectively, z is a length of a vertical line to a tangent plane at a peak of the aspheric surface from a point located on the aspheric surface and positioned at a height of Y from the optical axis. Here, the following values are employed for K, R, A, B, C, D, E, F, and G

K=0
R=-1.2404177
A=-3.6788233
B=40.005615
C=-227.22235
D=-452.94592
E=13006.864
F=-39732.885
G=-35775.58

[Embodiment 4]

Embodiment 4 of the present invention is described, referring to Fig. 8, which is a cross sectional structural diagram schematically illustrating an optical pointing device 30c according to Embodiment 4. In Embodiment 4, an image forming element 14' is employed, which is different from the image forming element in Embodiment 1 in terms of the shape and position. The following describes what is different in Embodiment 4 in comparison with Embodiment 1 due to the replacement of the image forming element 14 with the image forming element 14'. In Embodiment 4, what is identical with Embodiment 1 is not described again.

The cover section 24 is configured to have a touch surface 11, a redirecting element 12, an image forming element 14', and reflective surfaces 17, and 18'. Unlike Embodiment 1, an entire upper surface of transparent resin 20' and a reverse surface of the cover section 24 are in close contact with each other, and the reverse surface of the cover section 24 is configured to have a recess above the transparent resin 20' (image capturing element 15).

The image forming element 14' is configured to form an image of an object 10 on the image capturing element 15 by reflecting reflective light L reflected from the object 10. The image forming element 14' is positioned at a place above the image capturing element 15 but on the positive side with respect to the image capturing element 15 along the y axis. The image forming element 14' is located at a corner between the upper surface and a side surface of the cover section 24. The image forming element 14' has a curved surface. That is, the corner of the cover section 24 between the upper surface and a side surface of the cover section 24 on the positive side along the y axis is rounded. In order for the image forming element 14' to efficiently reflect the light L, a reflective film made from a metal (for example, aluminum, nickel, gold, silver, dielectric dichroic film, or the like) is deposited on the toroidal surface of the image forming element 14'.

The reflective surface 17 is configured to reflect the light L reflected by total reflection of a slant surface 13, so as to guide the light L to the reflective surface 18'. Further, the reflective surface 17 reflects the light L reflected by the image forming element 14' and the reflective surface 18', so as to enter the light L into the image capturing element 15. The reflective surface 17 is positioned above the image element 15, and on the upper surface of the cover section 24. The reflective surface 17 is formed by depositing a reflective film on the upper surface of the cover section 24. The reflective film forming the reflective surface 17 is exposed outside and easy to see by a user. Thus, it is preferable to be a film not so eye-catching in appearance.

The reflective surface 18' is configured to reflect the reflective light L reflected from the object 10 and then the reflected by the reflective surface 17, so as to guide the light L to the image forming element 14'. Further, the reflective surface 18' reflects the light L reflected from the image forming element 14', so as to guide the light L to the reflective surface 17. The reflective surface 18' is positioned at a place above the image capturing element 15 but on the positive side with respect to the image capturing element 15 along the y axis. The reflective surface 18' is located on the reverse surface of the cover section 24. An edge of the reflective surface 18' on the negative side along the y axis may be positioned above an edge of the image capturing element 15 on the positive side along the y axis. The reflective surface 18' is formed by depositing the reflective film on the reverse surface of the cover section 24. The reflective film forming the reflective surface 18' is preferably capable of efficiently reflecting light. For example, the reflective surface 18' may be made by depositing a metal such as aluminum, nickel, gold, silver, dielectric dichroic film or the like.

Here, an optical path in which the light emitted from the light source 16 is reflected on the object 10 and enters the image capturing element 15. The light L reflected on the surface of the object 10 is reflected totally by the slant surface 13 of the redirecting element 12, so as to be guided into the positive direction along the y axis. The light L totally reflected by the slant surface 13 is then reflected by the reflective surface 17, and then by the reflective surface 18', so as to reach the image forming element 14'. The light L is reflected back by the image forming element 14', and then reflected by the reflective surface 18', and then by the reflective surface 17, so as to enter the image capturing element 15.

In Embodiment 4, unlike Embodiment 1, the image capturing element 14' is not formed on the reverse surface of the cover section 24, but at the corner of the cover section 24 between the upper surface and the side surface of the cover section 24 along the positive direction of the y axis. This eliminates the need of forming the cover section 24 with a reverse surface having a concave shape as a whole, thereby making it easy to mold the cover section 24. Further, this eliminates the need of forming a recess at a portion of the reverse surface of the cover section 24, which portion will be above the image capturing element 15, thereby giving the cover section 24 a more even thickness. This configuration can give a thin thickness to the optical pointing device 30c while attaining a better strength of the cover section 24.

Moreover, in the present Embodiment, the cover section 24 is mounted on the substrate section 26 by using, as positioning fiducials, the side surfaces and the upper surface of the substrate section 26. This makes it possible to position the substrate section 26 and the cover section 24 with a highly accurate positional relationship. Thus, the sections and the elements constituting the optical pointing device 30c can be disposed highly accurately. This makes it possible to realize an optical pointing device 30c with a high detection accuracy for detecting the object 10.

Embodiment 4 may be applied to Embodiment 2 as well as Embodiment 1, while Embodiment 4 is described as one modification of Embodiment 1. That is, it is possible to attain a similar effect to that of Embodiment 4 by replacing the image forming element 14 in Embodiment 2 with the image forming element 14', and replacing the reflective surface 18 in Embodiment 2 with the reflective surface 18', and by designing the sizes and positions of the sections and elements as appropriate. Further, when Embodiment 4 is applied to Embodiment 2, the reverse section of the cover section 24 can be formed as a flat surface without a recess section. This gives the cover section 24 a greater strength, makes it possible to assemble the cover section 24 and the substrate 26 with higher accuracy, and further reduces the thickness of the optical pointing device 30c.

[Embodiment 5]

Finally, an electronic apparatus provided with the optical pointing device is described, referring to Fig. 9. Fig. 9 is a view illustrating an outer appearance of a portable telephone 100 on which an optical pointing device 107. (a) of Fig. 9 is a front view of a portable telephone 100, and (b) of Fig. 9 is a back view of a portable telephone 100. (c) of Fig. 9 is a side view of the portable telephone 100. It should be noted that the electronic apparatus according to the present invention is not limited to a portable telephone, which is illustrated as an example in Fig. 9. The electronic apparatus may be, for example, a PC (especially, a mobile PC), PDA, a game machine, a remote controller for television, etc.

As illustrated in Fig. 9, the portable telephone 100 includes a monitor-side case 101 and an operating-side case 102. The monitor-side case 101 includes a monitor section 105 and a speaker section 106. The operating-side case 102 includes a microphone section 103, ten keys 104, and the optical pointing device 107. The optical pointing deice 107 mounted on the mobile telephone 100 may be any one of the optical pointing devices 30, 30a, 30b, 30c described in Embodiment 1 to 4.

In the present embodiment, the optical pointing device 107 is positioned above the ten keys 104 as illustrated in (a) of Fig. 9, but the present invention is not limited to the way the optical pointing device 107 is positioned or directed in (a) of Fig. 9.

The speaker section 106 is for outputting sound information to outside, and the microphone section 103 is for inputting sound information into the portable telephone 100. The monitor section 105 is for outputting image information. In the present embodiment, the monitor section 105 functions to display input information received via the optical pointing device 107.

The portable telephone 100 of the present embodiment is, as illustrated in (a) to (c) of Fig. 9, exemplified as a so-called foldable portable telephone 100 with an upper case (monitor-side case 101) and a lower case (operating-side case 102) hinged with teach other. This is simply because foldable types are most popular as the portable phone 100. It should be noted that the foldable portable telephone exemplified in the present embodiment is illustrative only and the portable telephone 100 to which the optical pointing device 107 can be mounted is not limited to the fordable types.

Recently, a foldable portable telephone 100 with a thickness of 10 mm or less when folded has been marketed. The thickness is very importable for portable phones 100 in consideration of portability thereof. In the operating-side case 102, components determining the thickness of the operating-side case 102 is, except its circuit substrate etc. inside thereof (not illustrated), the microphone section 103, the ten keys 104, and the optical pointing device 107. Among these, the optical pointing device 107 is the thickest. Thus, thinning the optical pointing device 107 leads to thinning the portable telephone 100 directly. Thus, the optical pointing device of the present invention, which can have a thinner thickness, is an invention suitable for an electronic device, such as the portable telephone 100, required to be thinner.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

[Means for solving the problem]

In order to attain the object, a light guide according to the present invention is a light guide, including: a reflective section for receiving light entering via a light incident section, and reflecting the light so as to guide the light to a light guiding direction; and an image forming reflective section for receiving the light reflected by the reflective section and reflecting the light to an opposite direction backward to the light guiding direction, so as to form an image of the light, the light guide outputting the image of the light from a light output section.

Moreover, a light guiding method according to the present invention is a light guiding method, including: reflecting light entering via a light incident light, so as to guide the reflected light into a light guiding direction; reflecting the reflective light into an opposite direction backward to the light guiding direction, so as to form an image of the light; and outputting the image of the light from a light output section.

With this configuration, because the light guide is configured to have the reflective section and the image forming reflective section, the light guide, the reflective section, and the image forming reflective section can be integrated as one component. This reduces the number of components constituting an optical pointing device. Thus, the number of steps in assembling can be reduced in a manufacturing process of the optical pointing device. As a result, it is possible to reduce assembling errors in assembling the components. Further, by preparing a mold for the light guide with high accuracy, it is possible to manufacture the reflective section and the image forming reflective section with high accuracy. Furthermore, the reflective section and the image forming reflective section can be positioned with highly accurate positional relationship by stable process. This reduces the manufacturing cost of the optical pointing device and improves the optical pointing device in terms of detection accuracy for detecting an object.

In order to attain the object, an optical pointing device according to the present invention is an optical pointing device, including a light source for radiating light on an object, a light guide for receiving, via a light incident section, light reflected from the object, and guiding the light so as to output the light from a light output section, and an image capturing element for receiving the light outputted from the light guide, wherein: the light guide is configured to receive the light via the light incident section, reflect the light so as to guide the light to a light guiding direction, reflect the light to an opposite direction backward to the light guiding direction, so as to form an image of the light, and output the image of the light from the light output section.

With this configuration, the light guide is configured to receive the light via the light incident section, reflect the light so as to guide the light to a light guiding direction, reflect the light to an opposite direction backward to the light guiding direction, so as to form an image of the light, and output the image of the light from the light output section. That is, it is not necessary to have, in addition to the light guide, another component such as a component for reflecting light to guide the light to the light guiding direction, a component for reflecting the light to the opposite direction backward to the light guiding direction, so as to form an image of the light. This reduces the number of components constituting an optical pointing device. Thus, the number of steps in assembling can be reduced in a manufacturing process of the optical pointing device. As a result, it is possible to reduce assembling errors in assembling the components. This reduces the manufacturing cost of the optical pointing device and improves the optical pointing device in terms of detection accuracy for detecting an object.

The optical pointing device according to the present invention is preferably so configured that the light guide is integrated with a cover section for protecting the image capturing element.

With this configuration, in which the cover section and the light guide are formed integrally, it is possible to reduce the number of components constituting an optical pointing device. Thus, the number of steps in assembling can be reduced in a manufacturing process of the optical pointing device. As a result, it is possible to reduce assembling errors in assembling the components. Further, by preparing a mold for the light guide with high accuracy, it is possible to manufacture the reflective section and the image forming reflective section with high accuracy. Furthermore, the reflective section and the image forming reflective section can be positioned with highly accurate positional relationship by stable process. This reduces the manufacturing cost of the optical pointing device and improves the optical pointing device in terms of detection accuracy for detecting an object.

Moreover, the optical pointing device according to the present invention is preferably so configured that the light source and the image capturing element are provided on a substrate and sealed with transparent resin independently.

With this configuration, the light source, the image capturing element, and the substrate are formed integrally. This reduces the number of components constituting an optical pointing device. Thus, the number of steps in assembling can be reduced in a manufacturing process of the optical pointing device. As a result, it is possible to reduce assembling errors in assembling the components. This reduces the manufacturing cost of the optical pointing device and improves the optical pointing device in terms of detection accuracy for detecting an object.

Moreover, the optical pointing device according to the present invention is preferably so configured that the transparent resin sealing the light source and the transparent resin sealing the image capturing element have a substantially rectangular shape(s); the transparent resin sealing the light source has a side surface that is on the same plane on which a side surface of the substrate is; the transparent resin sealing the image capturing element has a side surface that is on the same plane on which another side surface of the substrate is; and the light guide is mounted on the substrate by using, as positioning fiducials, an upper surface of the transparent resin, the side surface and the another side surface of the substrate, the side surface of the transparent resin sealing the light source, and the side surface of the transparent resin sealing the image capturing element.

With this configuration, the light guide is mounted on the substrate by using, as positioning fiducials, an upper surface of the transparent resin, the side surface and the another side surface of the substrate, the side surface of the transparent resin sealing the light source, and the side surface of the transparent resin sealing the image capturing element. By this, the light source, the image capturing element, the substrate, and the light guide can be disposed with highly accurate positional relationship. Therefore, it is possible to realize an optical pointing device with high detection accuracy for detecting an object.

Moreover, the optical pointing device according to the present invention is preferably so configured that the light guide has a reverse surface having the light output section and a recess; and the reflective section has a slant surface formed in the recess.

In this configuration, the reflective section is a recess having a slant surface and being positioned on the reverse surface of the light guide, which reverse surface has the light output section. This simplifies a mold for the light guide, thereby making is easy to manufacture the light guide and reduce the manufacturing cost of the light guide.

Moreover, the optical pointing device according to the present invention is preferably so configured that the reflective section is provided on a reverse surface of the light guide, which reverse surface has the light output section; and the reflective section is a reflective diffractive element.

In this configuration, the reflective section is a reflective diffractive element provided on the reverse surface of the light guide, which reverse surface has the light output section. That is, a light guide having the function of the reflective section can be formed without forming a recess for forming the reflective section in the light guide. This gives the light guide a more even thickness than the light guide having the reflective section formed with the recess section. This makes it possible to give the light guide a thinner thickness together with a greater strength.

Moreover, the optical pointing device according to the present invention is preferably so configured that the light guide has a reverse surface having the light output section and a recess; and the image forming reflective section has a toroidal surface formed in the recess section, the toroidal surface having different curvatures for a cross section along the light guiding direction and a cross section perpendicular to the light guiding direction.

In this configuration, the image forming reflective section has a toroidal surface formed in the recess section having the light output section and a recess. Thus, it is possible to excellently correct astigmatism caused due to a difference between focal distances along the light guide direction and the direction perpendicular to the light guide. With this, the image forming capacity of the image forming reflective section is improved, thereby making it possible for the image capturing element to capture a clear image.

Moreover, the optical pointing device according to the present invention is preferably so configured that the reflective section is provided on a reverse surface of the light guide, which reverse surface has the light output section; and the reflective section is a reflective fresnel lens.

In this configuration, the reflective section is a reflective fresnel lens provided on the reverse surface of the light guide, which reverse surface has the light output section. That is, a light guide having the function of the reflective section can be formed without forming a recess for forming the reflective section in the light guide. This gives the light guide a more even thickness than the light guide having the reflective section formed with the recess section. This makes it possible to give the light guide a thinner thickness together with a greater strength.

Moreover, the optical pointing device according to the present invention is preferably so configured that the reflective section is provided on a reverse surface of the light guide, which reverse surface has the light output section; and the reflective section is a reflective hologram lens.

In this configuration, the reflective section is a reflective hologram lens. Thus, it is possible to correct aberration that cannot be corrected with normal lenses. As a result, the image forming reflecting section for reflecting the reflective light is improved in terms of its image forming capacity, thereby making it possible for the image capturing element to capture a clear image of the object.

Moreover, the optical pointing device according to the present invention is preferably so configured to further comprise a reflective film for receiving the light reflected from the reflective section and reflecting the light totally to the image forming reflective section, the reflective film being part of a surface of the light guide, on which surface the light incident section is, and being located off the light incident section.

With this configuration, the reflective film is part of the surface of the light guide, which surface having the light incident section. The reflective film is located off the incident part, and is to configured to totally reflect the light reflected from the reflective section. There is a possibility that an object may touch the surface of the light guide, which surface having the light incident section. If the object touched a portion of the surface other than the incident section and therefore the light reflected from the reflective section was reflected at the portion touched by the object, the light reflected from the reflective section would be reflected on the surface of the object, thereby shifting the optical path of the light reflected from the reflective section. By providing the reflective film for totally reflecting the light reflected from the reflective section, it is possible to avoid the shifting of the optical path of the light reflected from the reflective section. This improves the image forming capacity of the image forming reflective section, thereby making it possible for the image capturing element to capture a clear image.

Moreover, the optical pointing device according to the present invention is preferably so configured that the light entering via the light incident section has a non-visible wavelength; and the reflective film is transmissive to light of a visible wavelength.

With this configuration, the reflective film is transmissive to light of a visible wavelength, and therefore the reflective film formed on the surface of the light guide is invisible for human eyes. Thus, even if the reflective film is formed on the surface of the light guide, the outer appearance of the light guide is not affected.

Moreover, the optical pointing device according to the present invention is preferably so configured that an optical path of the light entering via the light incident section passes inside the light guide from the entry of the light via the light incident section to the output of the light from the light output section.

In this configuration, optical path of the light entering via the light incident section passes inside the light guide from the entry of the light via the light incident section to the output of the light from the light output section. Thus, the light entering via the light incident section passes though a single medium, from the entry of the light via the light incident section to the output of the light from the light output section. This prevents scattering reflection and attenuation caused at a boundary between different medium.

Moreover, the optical pointing device according to the present invention is preferably so configured that, in order to be outputted from the light output section, the light entering via the light incident section is reflected between a/the surface of the light guide on which surface the light incident section is, and a/the reverse section of the light guide on which reverse surface the light output section is.

In this configuration, in order to be outputted from the light output section, the light entering via the light incident section is reflected between the surface of the light guide on which surface the light incident section is, and the reverse section of the light guide on which reverse surface the light output section is. This configuration allows to design a long optical path from the entry of the light via the light incident section to the output of the light from the light output section.

An electronic apparatus according to the present invention preferably comprises any one of the optical pointing devices described above.

With this configuration, the electronic apparatus is provided with the optical pointing device that can easily provide the electronic apparatus with a thin thickness. The thickness of electronic apparatus provided with an optical pointing device is largely affected by the thickness of the optical pointing device. With this configuration, the electronic apparatus can attain a thin thickness even if the electronic apparatus is provided with an optical pointing device.

The specific Embodiment and examples described in the Description of Embodiments of the present application is merely illustrative to explain the technical content of the present invention and the present invention shall not be interpreted as being limited such specific Embodiment and examples narrowly. The present invention can be worked with various modification within the spirit of the invention and the scope of the invention described in Claims.

Industrial Applicability

The present invention is applicable to input apparatuses such as PCs and portable phones, especially to portable apparatus required to have a small size and a thin thickness.

Reference Signs List

| | |
|---|---|
| 10: | Object |
| 11: | Touch Surface (Incident Surface) |
| 12: | Redirecting Element (Reflective Section) |
| 12': | Diffractive Element (Reflective section) |
| 13: | Slant Surface (Tilted Surface) |
| 14, 14': | Image Forming Element (Image Forming Reflective Section) |
| 15: | Image Capturing Element |
| 16: | Light Source |
| 17, 18, 18': | Reflective Surface (Reflective Film) |
| 20, 20' | Transparent Resin |
| 21: | Circuit Substrate (Substrate) |
| 24: | Cover Section (Light Guide) |
| 25: | Bottom Surface |
| 26: | Substrate Section |
| 27: | Lens Section |
| 30, 30a, 30b, 30c: | Optical Pointing Device |
| 100: | Portable Telephone |
| 101: | Monitor-side Case |
| 102: | Operator-side Case |
| 103: | Microphone Section |
| 104: | Ten keys |
| 105: | Monitor Section |
| 106: | Speaker Section |
| 107: | Optical Pointing Device |
| L, L1, L2, L3: | Reflective Light from Object |
| M: | Light radiated from Light Source |
| y1: | Length along y axis between touch surface center and image capturing element center |

y2: Length along y axis between touch surface center and image forming element center
z1: Length along z axis between touch surface center and image forming element center
z2 Thickness of cover section
z3 Length along z axis of touch surface and image capturing element surface.
θ: Slant Angle

**Claims**

1. Angle A light guide, comprising:

   a reflective section for receiving light entering via a light incident section, and reflecting the light so as to guide the light to a light guiding direction; and
   an image forming reflective section for receiving the light reflected by the reflective section and reflecting the light to an opposite direction backward to the light guiding direction, so as to form an image of the light, the light guide outputting the image of the light from a light output section.

2. section. An optical pointing device, including a light source for radiating light on an object, a light guide for receiving, via a light incident section, light reflected from the object, and guiding the light so as to output the light from a light output section, and an image capturing element for receiving the light outputted from the light guide, wherein:

   the light guide is configured to receive the light via the light incident section, reflect the light so as to guide the light to a light guiding direction, reflect the light to an opposite direction backward to the light guiding direction, so as to form an image of the light, and output the image of the light from the light output section.

3. the image of the light from the light output section. The optical pointing device as set forth in claim 2, wherein the light guide is integrated with a cover section for protecting the image capturing element.

4. ng element. The optical pointing device as set forth in claim 2 or 3, wherein the light source and the image capturing element are provided on a substrate and sealed with transparent resin independently.

5. te and sealed with transparent resin independently. The optical pointing device as set forth in claim 4, wherein:

   the transparent resin sealing the light source and the transparent resin sealing the image capturing element have a substantially rectangular shape(s);
   the transparent resin sealing the light source has a side surface that is on the same plane on which a side surface of the substrate is;
   the transparent resin sealing the image capturing element has a side surface that is on the same plane on which another side surface of the substrate is; and
   the light guide is mounted on the substrate by using, as positioning fiducials, an upper surface of the transparent resin, the side surface and the another side surface of the substrate, the side surface of the transparent resin sealing the light source, and the side surface of the transparent resin sealing the image capturing element.

6. of the transparent resin sealing the image capturing element. The light guide as set forth in claim 1, wherein:

   the light guide has a reverse surface having the light output section and a recess; and
   the reflective section has a slant surface formed in the recess.

7. lective section has a slant surface formed in the recess. The light guide as set forth in claim 1, wherein:

   the reflective section is provided on a reverse surface of the light guide, which reverse surface has the light output section; and
   the reflective section is a reflective diffractive element.

8. lective section is a reflective diffractive element. The light guide as set forth in claim 1, 6, or 7, wherein:

   the light guide has a reverse surface having the light output section and a recess; and
   the image forming reflective section has a toroidal surface formed in the recess section, the toroidal surface having different curvatures for a cross section along the light guiding direction and a cross section perpendicular to the light guiding direction.

9. ection perpendicular to the light guiding direction. The light guide as set forth in claim 1 or 8, wherein:

the reflective section is provided on a reverse surface of the light guide, which reverse surface has the light output section; and
the reflective section is a reflective fresnel lens.

10. ective section is a reflective fresnel lens. The light guide as set forth in claim any one of 1, and 7 to 9 , wherein:

the reflective section is provided on a reverse surface of the light guide, which reverse surface has the light output section; and
the reflective section is a reflective hologram lens.

11. ective section is a reflective hologram lens. The light guide as set forth in any one of claims 1, and 6 to 10, further comprising a reflective film for receiving the light reflected from the reflective section and reflecting the light totally to the image forming reflective section,
the reflective film being part of a surface of the light guide, on which surface the light incident section is, and being located off the light incident section.

12. cident section. The light guide as set forth in claim 11, wherein:

the light entering via the light incident section has a non-visible wavelength; and
the reflective film is transmissive to light of a visible wavelength.

13. th. The light guide as set forth in any one of claims 1, and 6 to 12, wherein:

an optical path of the light entering via the light incident section passes inside the light guide from the entry of the light via the light incident section to the output of the light from the light output section.

14. ection. The light guide as set forth in any one of claims 1, and 6 to 13, wherein:

in order to be outputted from the light output section, the light entering via the light incident section is reflected between a/the surface of the light guide on which surface the light incident section is, and a/the reverse section of the light guide on which reverse surface the light output section is.

15. the light output section is. An electronic apparatus comprising an optical pointing device as set forth in any one of claims 2 to 5.

16. orth in any one of claims 2 to 5. A light guiding method, comprising:

reflecting light entering via a light incident light, so as to guide the reflected light into a light guiding direction;
reflecting the reflective light into an opposite direction backward to the light guiding direction, so as to form an image of the light; and
outputting the image of the light from a light output section.

F I G. 1

FIG. 2

(a)

(b)

(c)

F I G. 3

(a)

11:TOUCH SURFACE (SURFACE OF IMAGE CAPTURING ELEMENT)

L1
L2
L3

14:IMAGE FORMING ELEMENT (REFLECTIVE LENS)

LENS CENTRAL AXIS

(b)

11:TOUCH SURFACE

L1
L2
L3

14a:TRANSMISSIVE LENS

LENS CENTRAL AXIS

15:SURFACE OF IMAGE CAPTURING ELEMENT

F I G.  4

FIG. 5

(a)

(b)

(c)

(d)

(e)

FIG. 6

FIG. 7

FIG. 8

FIG. 9

(a)       (b)       (c)

## INTERNATIONAL SEARCH REPORT

| | International application No. |
|---|---|
| | PCT/JP2010/066974 |

A.  CLASSIFICATION OF SUBJECT MATTER
*G06F3/033*(2006.01)i, *G06F3/041*(2006.01)i, *G06F3/042*(2006.01)i, *G06T1/00*
(2006.01)i

According to International Patent Classification (IPC) or to both national classification and IPC

B.  FIELDS SEARCHED

Minimum documentation searched (classification system followed by classification symbols)
G06F3/033, G06F3/041, G06F3/042, G06T1/00

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 11-031216 A  (Olympus Optical Co., Ltd.),<br>02 February 1999 (02.02.1999),<br>paragraph [0022]; fig. 4<br>(Family: none) | 1-3,6-16<br>4,5 |
| A | JP 2007-050032 A  (Zenryo Kogyo Kofu Yugen Koshi),<br>01 March 2007 (01.03.2007),<br>entire text; all drawings<br>(Family: none) | 1-16 |
| A | JP 11-509639 A  (The National Registry, Inc.),<br>24 August 1999 (24.08.1999),<br>entire text; all drawings<br>& US 5596454 A          & EP 842448 A<br>& WO 1996/013742 A1     & AU 4280996 A<br>& CA 2203924 A          & CN 1209881 A | 1-16 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 October, 2010 (26.10.10) | 09 November, 2010 (09.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008226224 A
- WO 2008507787 A, Tokuhyo
- WO 2008510248 A, Tokuhyo